# EUROPEAN PATENT APPLICATION

(11) **EP 2 664 786 A1**
(43) Date of publication of application: **20.11.2013**
(21) Application number: 12168237.1
(22) Date of filing: 16.05.2012
(51) Int. Cl.: F03B 13/00, F03D 9/00

(54) **Fluid regulating valve**

(71) Applicant: Energreen AS, 4325 Sandnes (NO)
(72) Inventor: Melhus, Trond, NO-4329 SANDNES (NO); Sörensen, Per Hassel, NO-4307 NORGE (NO)
(74) Representative: Kransell & Wennborg KB

(57) **Abstract**

A valve for regulating the fluid pressure and/or the fluid flow in a fluid distribution network. The valve comprises a stator (10, 110) defining an interior space (14, 114); at least one inlet port (15, 131a, 132a) and at least one outlet port (15, 133a, 134a). The inlet port and outlet port are arranged for being connected to a fluid duct. A rotor (20, 120) is arranged rotatable about a rotational axis in the interior space and is provided with a rotor core (21, 121) and a number of vanes (23, 123), which are movable in relation to the core. The rotor continuously divides, in sealing relation with the stator, upon rotation of the rotor the interior space into at least two mutually separated chambers (14a, 14b, 114a-d). Each chamber comprises an inlet opening (17a, 17b, 112a) and an outlet opening (18a, 18b, 112b). The valve further comprises at least one inlet channel (17, 131, 132) which connects the at least one inlet port with at least one inlet opening of each of said at least two chambers and at least one outlet channel 18, 133, 134) which connects at least one outlet opening of each of said at least two chambers with the at least one outlet port

## Description

### TECHNICAL FIELD

The invention relates to a valve for regulating the fluid pressure and/or the fluid flow in a fluid distribution and transportation network. In particular the invention relates to such a valve comprising a stator and a rotor arranged in the stator. The valve may be used to decrease the fluid pressure and/or flow, i.e. to produce a negative differential pressure or flow between the inlet port and the outlet port of the device by extracting power from the fluid. The rotor may be connected to a braking means for causing a decrease of the fluid pressure or the fluid flow.

### BACKGROUND AND PRIOR ART

There often exists a need for regulating the fluid pressure and/or the fluid flow in fluid distribution networks. An example of such a fluid distribution network is a water distribution system used in cities for distributing drinking water from a central reservoir to a plurality of households and other water consumers. Such networks or systems typically comprise one or several main water lines or conduits that convey water from a reservoir or a pump station to different zones of the network. Each zone normally comprises a secondary water line or conduit which conveys water to different areas in the zone. In each such area a consumer distribution line supplies drinking water from the secondary conduit to each individual consumer within the area. Typically the pressure in the main conduits is around 20 bar, whereas the pressure in the individual consumer lines is kept at around 3 bar. Therefore the distribution network often comprises pressure reducing means which normally are arranged at the junctions between the main and secondary conduits and/or between the secondary conduits and the consumer lines. The pressure reducing means may however also be arranged within the main, secondary or the consumer line conduits. In other systems there may be arranged additional intermediate water line conduits operating at different pressures between the main water line and the consumer distribution lines. Traditionally the pressure reducing means are constituted by conventional pressure valves, which often are spring loaded or controlled by a pilot pressure.

In order to be able to utilize the energy of the fluid, it has been suggested to provide the pressure reducing valve in such a water distributing network with a turbine which is arranged to capture energy which is released during pressure reduction. US 6,824,347 B2 discloses such valve.

Even though the previously known valves may be utilized at and adapted for harvesting of energy while regulating the fluid pressure and/or the fluid flow in different types of fluid distribution networks, there still remain disadvantages of the known arrangements. A major disadvantage of the previous known valves is the comparatively low efficiency, i.e. that a comparatively large portion of the energy carried by the fluid is lost in the valve, before conversion to useable energy, such as electricity. A further disadvantage is a considerable wear of the constructional parts, especially at high fluid pressures. Additionally, the known valves need to be specially designed and constructed for each field of application and nominal load.

### SUMMARY OF THE INVENTION

It is therefore an object of the present invention to provide an enhanced valve for regulating the fluid pressure and/or the fluid flow in a fluid distribution network.

It is another object to provide such a valve which allows for energy production at a comparatively high efficiency.

It is a further object to provide such a valve at which the wear of constructional parts may be kept low and the reliability in service high.

Another object is to provide such a valve which may be constructed with comparatively thin or light constructional parts and still be able to withstand comparatively high fluid pressures and flows.

Still another object is to provide such a valve which readily allows for a modular construction whereby the device may be easily constructed and assembled for different applications by utilizing a comparatively low number of standardized components in different combinations.

These and other objects are provided by a valve as set out in the preamble of claim 1, which valve comprises the special technical features specified in the characterizing portion of the claim.

The valve is intended for regulating the fluid pressure and/or the fluid flow in a fluid distribution network. It comprises a stator defining an interior space; at least one inlet port and at least one outlet port, which inlet port and outlet port are arranged for being connected to a fluid duct of the fluid distribution network; and a rotor. The rotor is arranged rotatable about a rotational axis in the interior space and provided with a rotor core and a number of vanes which are movable in relation to the core and which rotor, in sealing relation with the stator, upon rotation, continuously divides the interior space into at least two mutually separated chambers. Each chamber comprises an inlet opening and an outlet opening. In accordance with the invention, the valve comprises at least one inlet channel which connects the at least one inlet port with at least one inlet opening of each of said at least two chambers and at least one outlet channel which connects at least one outlet opening of each of said at least two chambers with the at least one outlet port.

The stator and the rotor thus define a number of chambers, each of which extends axially and circumferentially around the rotor. At some embodiments sealing between the rotor core and the stator may define the chambers. It is however also possible that the vanes in sealing relation with the stator define the chambers. The terms sealing relation and sealing contact are used herein to define a relation between the rotor and the stator where a substantial sealing for the fluid occurs. The rotor core and/or the vanes may be in physical contact with the stator. It is however also possible that the core and/or the vanes are arranged with some play to the stator. At such embodiments a fluid film will be formed between the core and/or vanes and the stator, which fluid film contributes to provide the sealing. At both alternatives some fluid leakage may occur. Such a fluid leakage is however comparatively small such that a substantially sealing occurs, which substantial sealing allows for that the energy of the fluid flow may be utilized for driving the rotation of the rotor. As will be described more in detail below, an important advantage of the present invention is that the invention provides for that the internal fluid leakage may be kept comparatively small whereby the power efficiency of the valve is enhanced

An inlet opening and an outlet opening for each chamber are arranged in the stator. The inlet openings may be arranged at a first circumferential end of each chamber and the outlet openings may be arranged in the stator at the opposite circumferential end of the respective chamber. Alternatively, the inlet and outlet openings may be arranged in end walls of the stator. In both cases, each chamber extends between the respective inlet opening and outlet opening arranged in the stator. Upon rotation of the rotor, the rotor core or at least one vane is always in sealing contact with the stator between each chamber. In this way all chambers are mutually separated from each other. Additionally, at least one vane is always in sealing contact with the stator between the inlet and outlet of each chamber. The fluid pressure prevailing in the upstream duct thus acts on the vane in each chamber and drives the rotor to rotation. By braking the rotor, energy is harvested from the fluid, whereby the pressure and/or the flow at the outlet is lower than the pressure and/or the flow at the inlet.

By means of the at least one inlet channel, which connects an upstream portion of the conduit to each chamber and the at least one outlet channel which connects each chamber with a downstream portion of said conduit, essentially the same pressure will prevail in each chamber. Hereby a number of advantages are achieved. The pressure equilibrium entails for that the rotor is at least essentially balanced in a radial direction. Hereby, the radial forces acting on the rotor's bearings will be reduced, which in turn results in reduced bearing friction. By this means the efficiency of the device is increased at the same time as the wear of the bearings is reduced and the service life increased. The radial balancing of the rotor also reduces the radial deflection of the rotor. This also entails for a reduced wear of the rotor and the surrounding housing. Additionally the reduced radial deflection allows for that the rotor and thereby the entire device may be constructed with a comparatively large axial extension in relation to the radial strength of the rotor and its supporting components. The inventive balancing of the rotor also reduces the internal leakage, which in previously known arrangements is caused by the comparatively large clearances between the stator and the rotor needed for compensating for the above mentioned radial deflection of the rotor. At the balanced rotor according to the invention, where the differential pressure acts essentially equally on all surfaces around the rotor, the reduced deflection of the rotor makes it possible to design the valve with essentially smaller clearances between stator and rotor, than what has been possible hitherto. This reduces internal leakage which in turn contributes greatly to an increased efficiency of the valve. It is further possible to construct the device with an increased capability to withstand high fluid pressures and flows in relation to the amount and specific strength of the material used for the load carrying components of the device. In this way the manufacturing costs may be reduced.

The circumferential extension of each chamber about the rotor is preferably made essentially equal. In this way, the product of the fluid pressure and the fluid area acting on the rotor, i.e. the radial force acting on the rotor, for each chamber is readily kept the same. Hereby radial force balancing of the rotor is readily achieved.

The interior space may be divided into an even number of chambers. Alternatively, the number of chambers may be odd. At embodiments with an odd number of chambers it may by possible to reduce pressure pulsations and vibrations in the stator and the rotor. An odd number of channels may also allow for an enhanced capacity of the valve.

The inlet openings may be arranged in pairs radially opposite to each other and the outlet openings may be arranged in pairs radially opposite to each other. This further entails for an equilibration of the radial forces acting on the rotor and facilitates manufacturing of the device.

The inlet channels and the outlet channels may be annular and extend circumferentially around the interior space. This entails for an axially space saving construction whereby the dimensions of the device may be kept comparatively low. Additionally, such an arrangement also provides pressure balancing between the fluid inside the stator and the fluid in the channels, which may reduce the requirements for strength and thus material selection and/or thickness of the material forming the stator.

Each inlet channel may be connected to a respective inlet opening of two chambers and each outlet channel connected to a respective outlet opening of two chambers. When the total number of chambers is even, this entails for that the number of inlet and outlet channels may be kept equal to the number of chambers divided by two, irrespective of how many chambers are arranged in the device. This facilitates a modular design and construction of the device, which in turn enhances the possibility to readily adapt the device for different applications.

The device may comprise a number of inlet channels and outlet channels, which are arranged one after the other along the axial extension of the rotor. This entails for a better distribution of the flow into the chambers. It also provides an enhanced axial distribution of the radial fluid forces acting on the rotor. Hereby the wear of the rotor and its supporting components is reduced further, especially at applications where the device comprises a comparatively large number of chambers.

By such an arrangement one after the other of an equal number of inlet channels and outlet channels, the axial force distribution may be further enhanced.

The inlet channels and outlet channels may further be arranged alternately one after the other along the axial extension of the rotor. Such an alternate arrangement enhances the axial distribution of radial forces even further.

The inlet channels and outlet channels may preferably be formed of essentially identical parts. Hereby the modular design and construction for adapting the device to different applications is greatly enhanced. This in turns result in an economical and efficient design and manufacturing of highly application adapted devices.

At least one inlet channel or outlet channel may be formed of a radially inner part exhibiting at least one communication opening and a radially outer part exhibiting an inlet port or an outlet port respectively. By this means it is possible to freely choose and arrange the direction of the inlet and/or outlet ports. This in turn entails for a space saving installation of the valve e.g. in existing water distribution networks where the available space may be limited.

When at least one inlet or outlet channel comprises radially inner and outer parts, the radially inner and outer parts may be circumferentially slidable in relation to each other. By this means the relative position between the inlet or outlet ports and the corresponding communication opening may readily be chosen and varied freely. By such a slidable arrangement the configuration of the inlet and outlet ports as well as the communications openings may further be set up and adapted on site at or even after installation of the vale. This entails for a further increased flexibility e.g. when arranging the valve in narrow spaces.

The radially inner part may further be circumferentially slidable in relation to the stator. This entails for an even greater flexibility in adapting the configuration of the inlet an/or outlet channels e.g. at or after installation of the valve.

The vanes may be arranged movable in relation to the core such that they define a respective active area which is parallel with the axial and radial directions of the rotor and which areas vary with the movement of the respective vane in relation to the core. This allows for that the vanes exhibit a varying stroke. The vanes and the rotor core are preferably arranged such that each vane has a minimum stroke immediately before and after having passed the inlet and outlet openings respectively and a maximum stroke in the operating space between the inlet and outlet opening of each chamber. Hereby, the counteracting forces generated by the fluid and acting on the vanes in a direction opposite to the rotational direction of the rotor may be reduced and minimized. This in turn entails for a reduction of losses and an increased efficiency of the device.

The vanes are preferably arranged such that the respective active area or the stroke, upon rotation of the rotor, is essentially zero at a position of the vane immediately before reaching the inlet opening and immediately after passing the outlet opening of each chamber. Hereby, the reduction of losses and increase of efficiency is enhanced even further.

The vanes may be arranged radially slidable in relation to the rotor core. Hereby, the desired variable stroke of the vanes is readily achieved in a space saving manner by means a comparatively low number of moving parts. This embodiment also allows for that the rotor may be rotated in any desirable direction.

Alternatively, the vanes may be arranged pivotal about pivotal axes which extend in parallel with the rotational axis of the rotor, in relation to the rotor core. This also readily allows the vanes to exhibit the desired variable stroke. Embodiments with pivotal or hinged vanes may entail certain advantages such that; a possibility to design the rotor stronger with a lower resulting deflection and easier machining; enhanced sealing between vanes and rotor as well as between vanes and stator and reduced wear of the vanes.

The rotor of the valve may be mechanically connected to a machine for utilizing energy extracted by the rotor from the fluid flow to drive said machine. Hereby, the device may be utilized both as a pressure and/or flow regulating valve and as a means for re-utilization of energy. Naturally this entails for great economical and environmental advantages in many applications involving fluid pressure reduction or fluid flow reduction.

The valve may comprise a generator which is mechanically connected to the rotor for braking the rotational movement of the rotor and generating electrical power. Hereby, the device may be utilized both as a pressure and/or flow regulating valve and as a means for generating electrical power. This also entails for great economical and environmental advantages in many applications involving fluid pressure reduction or fluid flow reduction.

Said machine may comprise a pump turbine which is mechanically connected to the rotor for braking the rotational movement of the rotor and increasing the pressure and/or the flow of a fluid flow through said machine. By this means the inventive vale may be efficiently used for supplying energy to a fluid flow. This fluid flow may be separated from the fluid flow which runs through the inventive valve or it may form part of a fluid flow system which also incorporates the fluid flow through the valve.

Further objects and advantages of the device according to the invention will appear from the following detailed description of embodiments and from the appended claims.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a perspective view of a valve according to a first embodiment of the invention.
Fig. 2 is a side view of the valve shown n fig. 1.
Fig. 3 is a sectional perspective view in of the valve shown in fig. 1 with certain parts removed.
Fig. 4a and 4b is a perspective view and a cross sectional view respectively of a portion of a stator core comprised in the valve shown in fig. 1.
Fig. 5 is a perspective view of a rotor comprised in the valve shown in fig 1.
Fig. 6 is a side view, partly in cross section of the valve shown in fig. 1.
Fig. 7 is a perspective view of a valve according to a second embodiment of the invention.
Fig. 8 is a perspective view partly in section of the valve shown in fig 7.
Fig. 9 is a perspective view of a stator core comprised in the valve shown in fig. 7.
Fig. 10a and 10b are perspective views, partly in section of certain components comprised in the valve shown in fig. 7.
Fig. 11 and 12 are perspective views, partly in section of the valve shown in fig 7, with certain parts removed.
Fig. 13 is a cross section of the valve shown in fig. 7, with certain parts removed.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

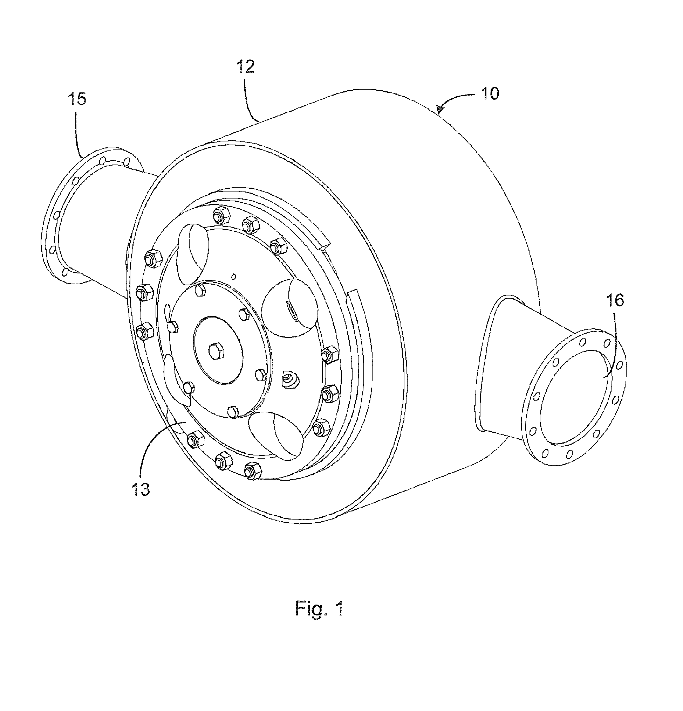

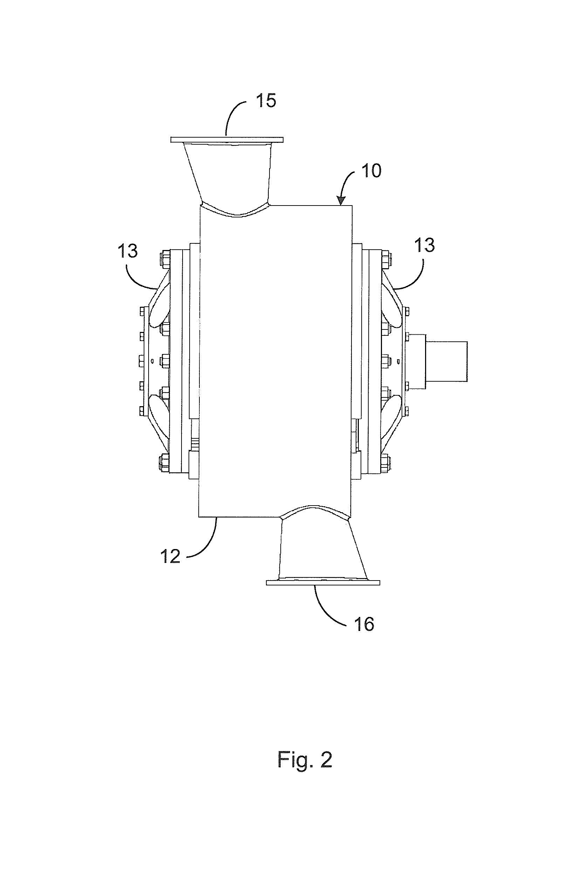

Figs. 1-6 illustrate a valve according to a first embodiment of the invention. The valve comprises a stator 10 which is formed of a polymer material, such as PA12. However, the stator may also be formed in other materials such as different metals. The stator comprises a stator core 11, an outer generally cylindrical wall 12 arranged concentrically outside of the stator core and two opposing end walls 13. The stator core 11 and the end walls 13 define an interior space 14. The stator 10 further comprises an inlet port 15 and an outlet port 16 which ports 15, 16 are formed of the outer wall 12. The inlet port 15 is arranged for being connected to an upstream fluid duct of a fluid distribution network and the outlet port 16 is arranged for being connected to a downstream duct of the network. The ports 15, 16 are for this purpose provided with connection flanges.

The stator core 11 and the outer wall 12 further define an inlet channel 17. The inlet channel 17 connects the inlet port 15 with a first 17a and a second 17b inlet opening which are arranged through the stator core and which connects the inlet channel with the interior space 14.The inlet openings 17a, 17b are arranged radially opposite to each other. Correspondingly the stator core 11 and the outer wall 12 also define an outlet channel 18. The outlet channel 18 connects the outlet port 16 with a first 18a and a second 18b outlet opening which are arranged through the stator core and which connects the outlet channel with the interior space 14. The outlet openings 18a, 18b are arranged radially opposite to each other and angularly displaced about 90 ° with respect to the inlet openings 17a, 17b.

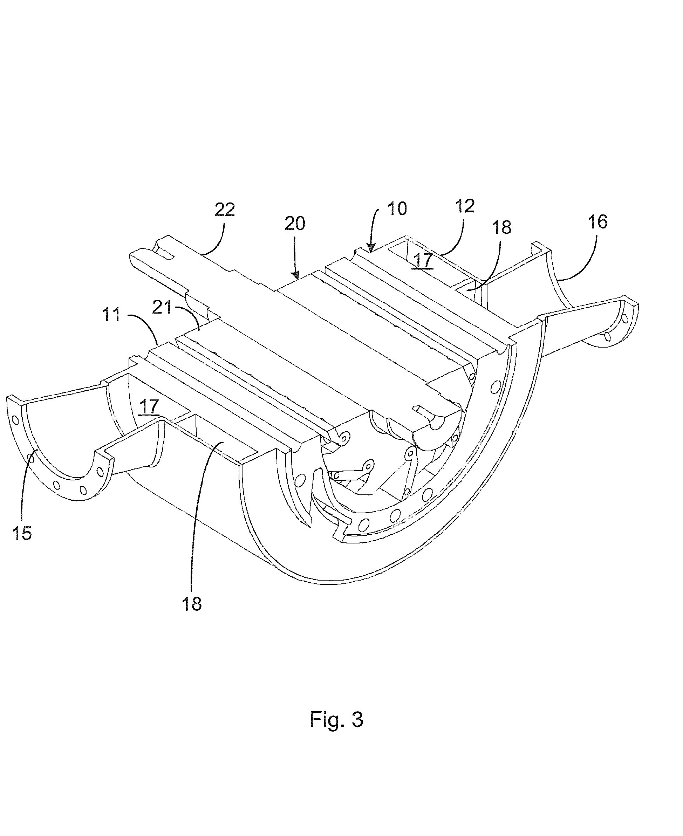

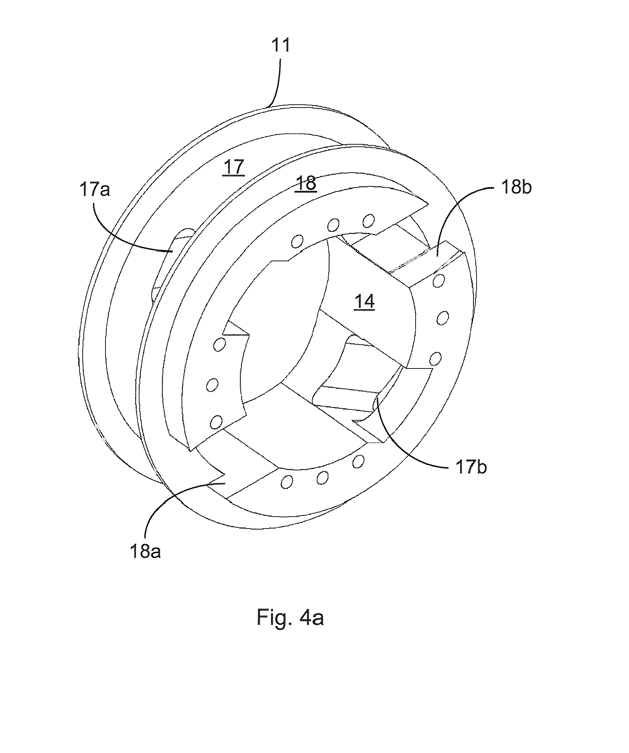

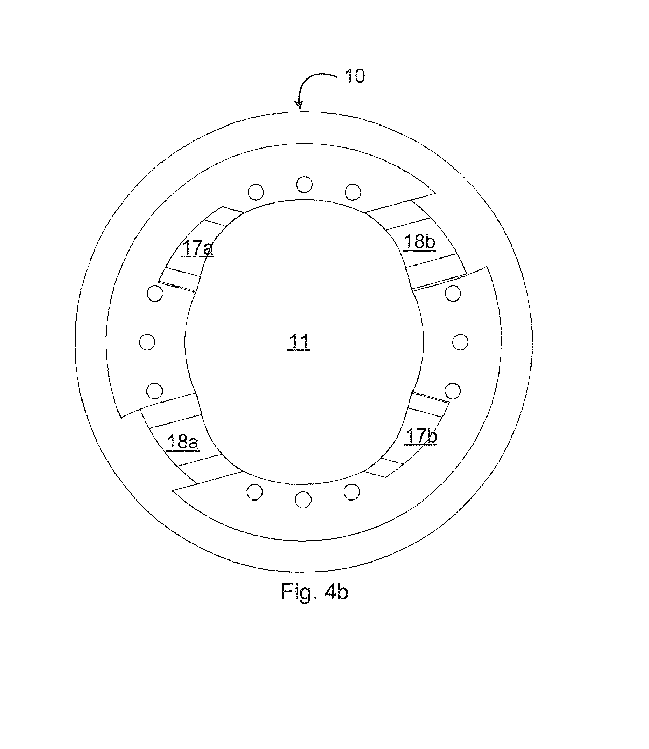

As best seen in fig. 3 and 4, the inlet channel 17 and the outlet channel 18 are arranged annularly around the stator core 11 and mutually side by side in the axial direction of the stator 10. The inlet openings 17a, 17b are thus arranged in a radial plane which is axially displaced from the radial plane in which the outlet openings 18a, 18b are arranged.

A rotor 20 is rotatably arranged in the interior space 14 of the stator 10. The rotor comprises a rotor core 21 which is fixed to an axle 22. A number of vanes 23 are pivotally fixed to the rotor core 21 such that the may pivot about a respective pivotal axis which extends in parallel with the rotational axis and the axle 22 of the rotor. At the illustrated embodiment the rotor 20 comprises eight vanes 23 which are evenly distributed over the circumference of the rotor core 21. Each vane 23 extends over essentially the entire length of the rotor core 21 and the interior space.

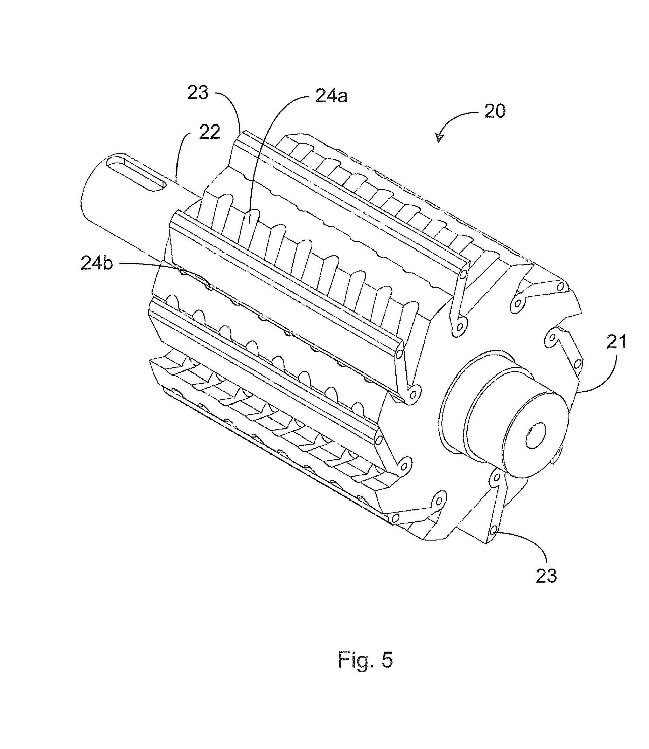

The rotor 20 as illustrated in fig. 5 is arranged to rotate in the anti-clockwise rotational directions. A number of first recesses 24a are formed in the outer surface of the rotor core 21 in proximity to and just behind (in the rotational direction) each vane. A number of second recesses 24b are correspondingly formed in the outer surface of the rotor core 21 just in front of each vane 23. The first 24a and second 24b recesses are arranged for enhancing the transportation of fluid at entry into and evacuation from the respective chamber. The recesses 24a, 24b further reduces the tendency of the vanes to stick to the rotor core 21 by allowing the fluid pressure to act on the rear side and the front side respectively of the vanes to thereby assist in pivoting the vanes to their extended and retracted positions.

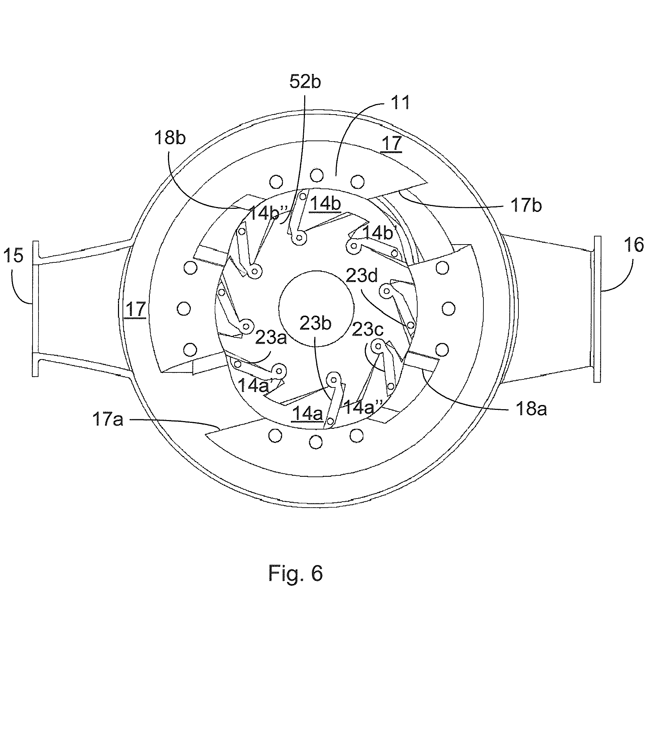

As best seen in fig 6, the vanes 23 are pivotal between a retracted position exhibiting a minimum stroke and an extracted position exhibiting a maximum stroke. The vane 23a which is positioned immediately before the inlet opening 17a is in its fully retracted position, at which the vane 23a does not protrude radially out from the outer surface of the rotor core 21. At this position the vane 23a exhibits essentially no active area upon which the fluid pressure may act and the variable stroke of the vane 23a may be said to be zero in this position. The vane 23b, which has passed the inlet opening 17a and has been pivoted outwards to its fully extended position, exhibits a maximum active area and stroke. The vane 23c is positioned overlapping outlet port 18a and has been pivoted inwardly to an intermediate active area and stroke. Essentially no hydraulic pressure forces act on the vane in this position. The vane 23d has passed the outlet opening 18 and is approaching the second inlet opening 17b. This vane 23d has again assumed the fully retracted position and exhibits essentially no active area and zero stroke.

As also best seen in fig 6, the interior surface of the stator core 11, which surface forms an outer wall of the interior space 14 is shaped such that the outer edge of each vane 23 is always in sealing contact with this outer wall. Additionally, the shape of the interior surface of the stator core 11 and the outer diameter of the rotor core 21 are chosen such that the rotor core is in sealing contact with the stator core 11 between outlet opening 18a and inlet opening 17b and also between outlet opening 18b and inlet opening 17a. In this way a first chamber 14a is formed between and along inlet opening 17a and outlet opening 18a. A second chamber 14b is formed between inlet opening 17b and outlet opening 18b. The first chamber 14a and the second chamber 14b are always sealingly separated from each other by means of the sealing contact between the rotor core 21 and the stator core positioned between the respective outlet openings 18a, 18b of the first 14a and second 14b chamber and the inlet openings 17b and 17a of the second 14b and first 14a chamber. In an embodiment which is not shown, the chambers may be separated from each other by means of the vanes being in sealing contact with the interior surface of the stator core. In such embodiments, the number and distribution of the vanes is chosen such that there is always at least one vane arranged between the respective pair of outlet openings and inlet openings.

Each chamber 14a, 14b is divided into an upstream portion 14a', 14b' or high pressure portion and a downstream portion 14a", 14b" or low pressure portion. The upstream portion 14a', 14b' of each chamber 14a, 14b is separated from the corresponding downstream portion 14a", 14b" by means of the vane 23b presently being arranged between the inlet opening 17a, 17b and the outlet opening 18a, 18b of the respective chamber 14a, 14b. In use it is the differential pressure between the upstream portion 14a', 14b' and the downstream portion 14a", 14b" acting on said vane 23b which drives the rotor to rotation, in the anti-clockwise directions as seen in fig. 6.

As indicated above both inlet openings 17a and 17b are in communication with the same inlet channel 17 and the same inlet port 15. Thus the same pressure will prevail in both chambers 14a and 14b, upstream of the vane 23b arranged between the inlet 17a, 17b and outlet 18a, 18b openings of the respective chamber. Additionally, the outlet openings 18a, 18b are in communication with the same outlet channel 18 and the same outlet port 16. Thus the pressure which prevails downstream of the vane 23b arranged between the inlet openings 17a, 17b, and the outlet openings 18a, 18b will also be essentially the same for both chambers 14a, 14b. In other words, the pressures which prevail in portions 14a' and 14b' are essentially mutually equal and the pressures which prevail in portions 14a" and 14b".

By this means the rotor 20 will be efficiently balanced in the radial direction which entails for several advantages as indicated above.

In use of the valve, the axle 22 of the rotor 20 is connected to a, preferably, controllable braking means (not shown). Preferably the braking means is an electrical generator which is controllable in regard of the output power. By controlling the braking force applied to the rotor 20, it is possible to control the differential pressure or the flow rate between the upstream portion 14a', 14b' and the downstream portion 14a", 14b" of the chambers 14a, 14b and thereby between the inlet port 15 and the outlet port 16 of the valve.

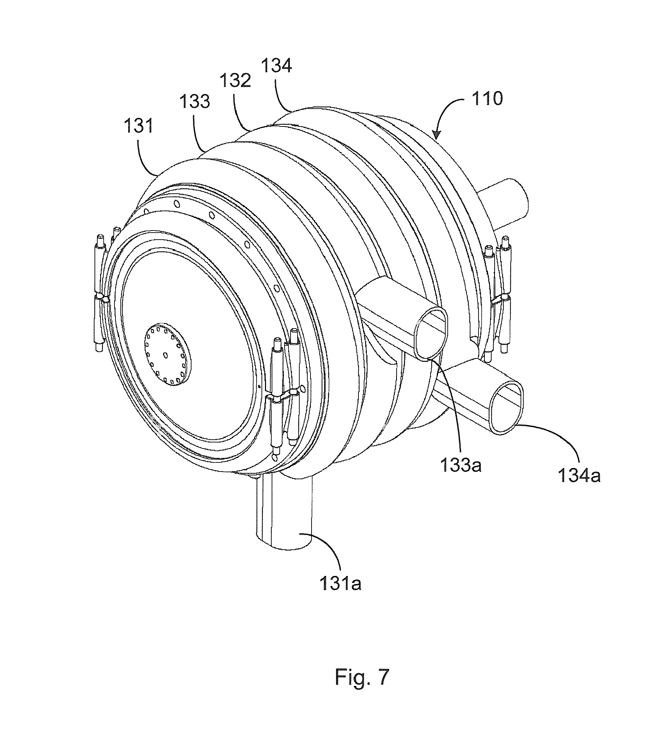

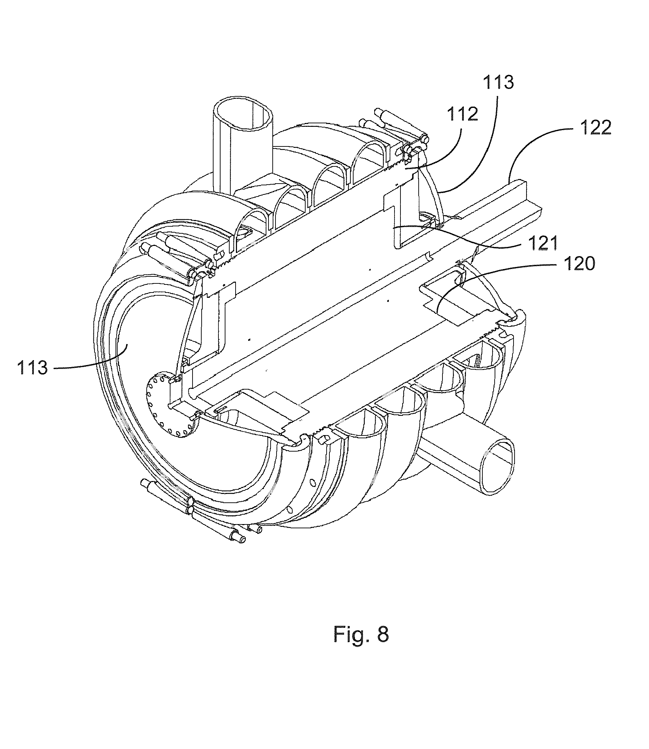

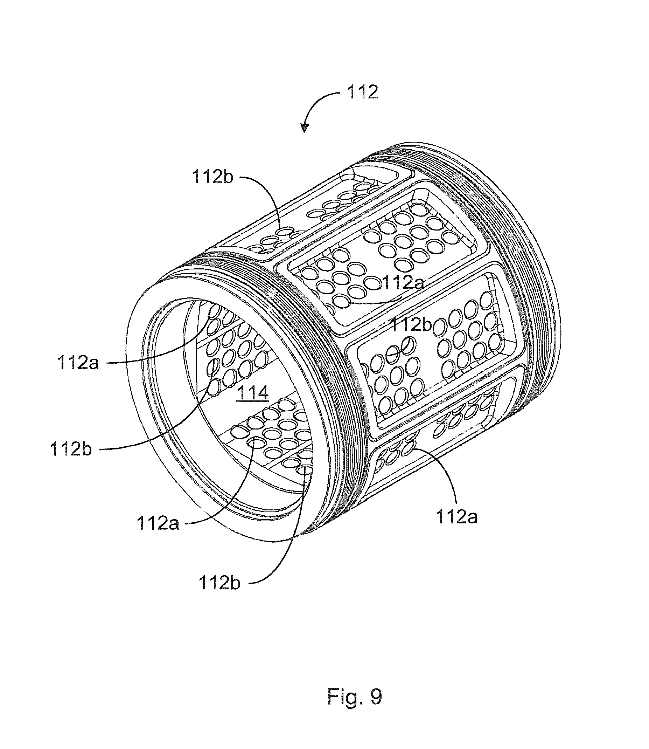

A second embodiment of the valve according to the invention is illustrated in figs. 7-13. This valve differs from the valve illustrated in figs. 1-6 mainly in that the rotor comprises radially sliding vanes instead of pivotal or hinged vanes and in the number of chambers and the arrangement of the inlet channels.

This valve comprises a stator 110 and a rotor 120. The stator 110 comprises a stator core 112 and axially opposing end walls 113. The stator core 112and the end walls 113 enclose an interior space 114. The stator core is generally cylindrical and exhibits a number of matrixes of radial through holes which forms inlet 112a and outlet 112b openings to and from the interior space 114.

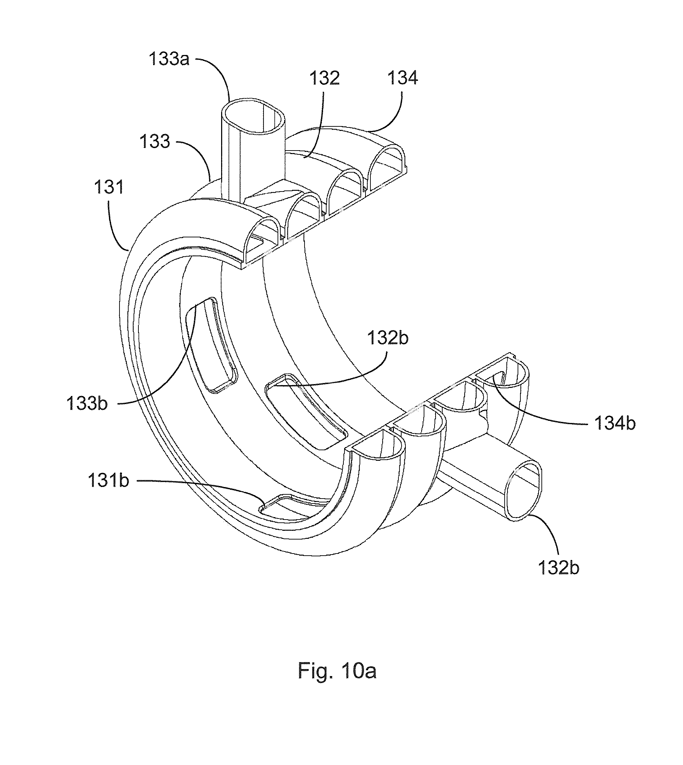

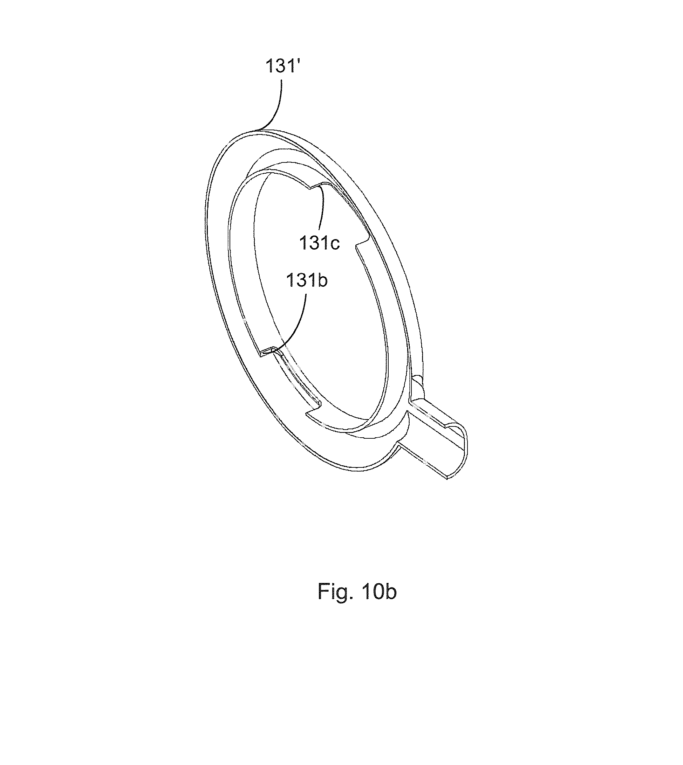

Two inlet channels 131, 132 and two outlet channels 133, 134 are arranged radially outside the stator core 112. Each inlet channel 131, 132 is generally annularly shaped and comprises a radially protruding inlet port 131a, 132a. Each outlet channel 133, 134 is also generally annularly shaped and comprises a radially protruding outlet port 133a, 134a. The inlet channels 131, 132 and the outlet channels 133, 134 are formed of essentially identical parts and are arranged alternately one after the other along the axial direction of the stator core 112. As indicated in fig. 10a and 10b each channel 131-134 is formed of two channel halves 131' and exhibits two radially opposing communication openings 131b, 131c, 132b, 133b, 134b.

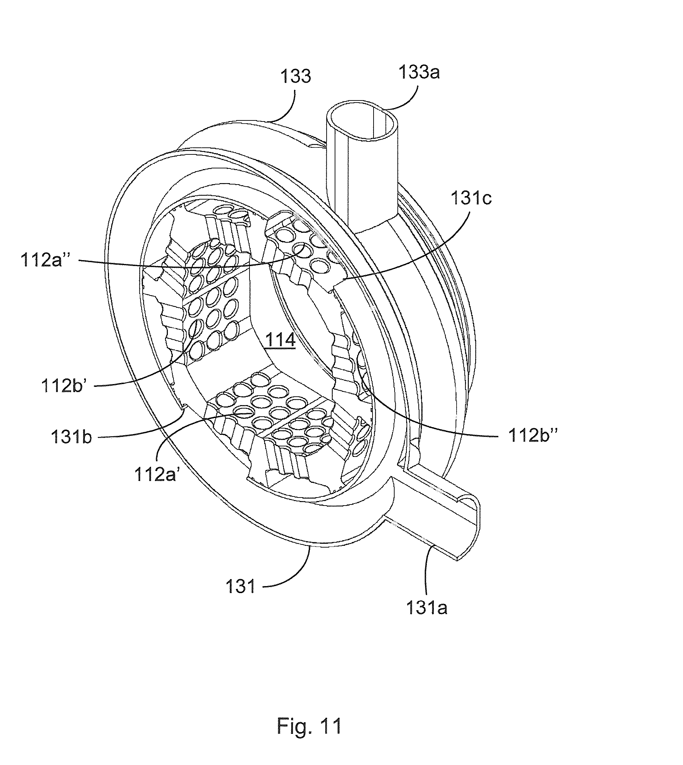

In fig. 11 it is shown how the inlet channel 131 connects the inlet port 131a via the communication openings 131b, 131c to the inlet openings 112a', 112a"and further with the interior space 114. Correspondingly, the interior space 114 is connected to the outlet port 133a, via radially opposed groups of outlet openings 112b', 112b", radially opposed communication openings 133b, 133c and the outlet channel 133. The inlet channel 132 and the outlet channel 134 are arranged in a corresponding way for connecting the interior space with the inlet port 132a and the outlet port (not shown) of the outlet channel 134.

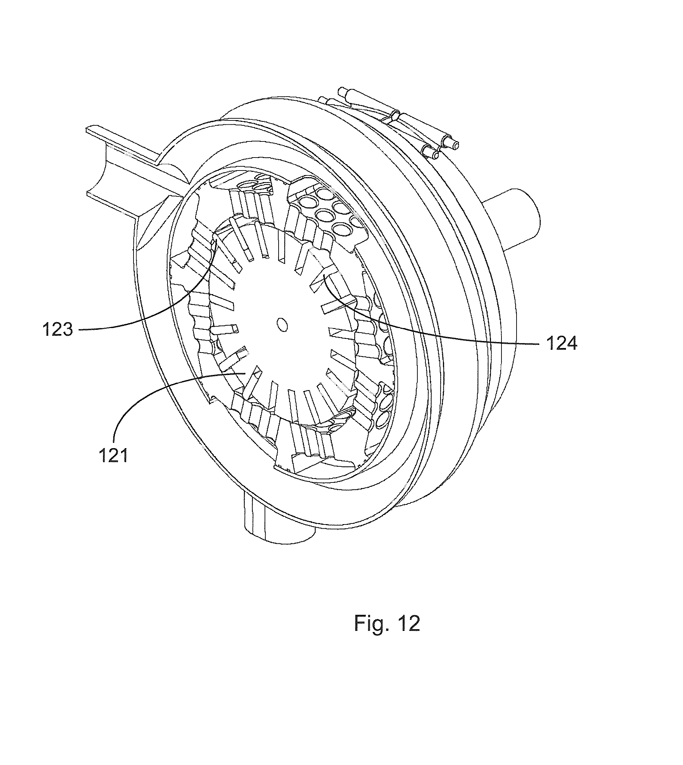

The rotor 120 arranged in the interior space 114 comprises a rotor core 121 which is fixed to an axle 122. Alternatively, the rotor core may be formed integrally as one piece with the axle. The rotor 120 further comprises nineteen vanes 123 which are arranged in radial slots 124 of the rotor core 121. See fig. 12 in which some of the vanes 123 are removed for more clearly showing the slots 124. The vanes 123 are radially displaceable between a retracted position in which they do not essentially protrude beyond the exterior envelope surface of the rotor core 121 and a fully extended position in which the vanes present a maximum active area which area is parallel with the axial and radial direction of the rotor 120. The retracted position thus corresponds zero stroke and no active area, whereas the extended position corresponds to a maximum stroke and maximum active area of the vanes 123.

The vanes are urged towards the extracted position by means of e.g. a spring member (not shown) which is arranged in each slot, 124, radially inwards of the respective vane 123. Upon rotation of the rotor, the radial displacement of the vanes 123 is caused by the urging spring member and the contact between the outer edge of the vane 123 and the interior surface of the stator core 112.

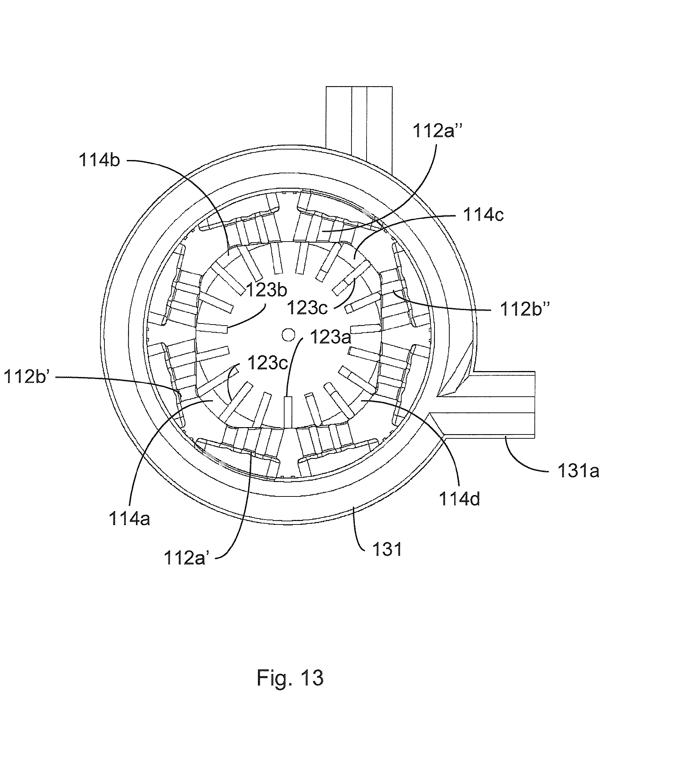

As seen in fig 13, the interior space is divided into four chambers 114a, 114b, 114c, 114d. The chamber 114a is separated from chamber 114b by means of vane 123b which is in sealing contact with the interior surface of the stator core 112, between the groups of through holes 112a, 112b. Correspondingly, the chamber 114a is separated from chamber 114d by means of vane 123a. All four chambers are separated from each neighbouring or adjacent chamber by means of a vane 123 which is in sealing contact with the interior surface of the stator core 112, between the groups of through openings 112a, 112b.

The valve shown in figs. 7-13 may be integrated into e.g. a water distribution network by connecting the inlet ports 131a, 132a to an upstream duct of the network and the outlet ports 133a, 134a to a downstream duct of the network. By this means it is ensured that essentially the same pressures will prevail in respective high pressure portions and low pressure portions of all chambers 114a-114d.

Fluid provided to inlet port 131a is transported into chamber 114a and 114c by means of inlet channel 131, communication openings 131b, 131c and inlet openings 112a', 112a". In chambers 114a, 114c the pressure of the fluid acts on the active area of the extended vanes 123c and drives the rotor to rotation in the clockwise direction as seen in fig. 12. When the rotor 120 has been rotated such that the vanes 123c have reached the outlet openings 112b', 112b" the corresponding amount of fluid is discharged though the outlet openings 112', 112" and further via the radially opposed communication openings 133b, and the channel 133 to the outlet port 133a.

Fluid provided to inlet port 132a is, in a corresponding manner, conveyed into and from the chambers 114b, 114d to thereby contribute to driving the rotor 120 to rotation. In use, the axle 122 is connected to an electric generator which may be controlled with regard to its braking power to thereby create any desired differential pressure or flow rate between the inlet ports 131a, 132a and the outlet ports 133a, 134a.The rotor 120 of the valve shown in figs. 7-13 is thus radially balanced in a manner corresponding to the valve shown in figs. 1-6 and exhibits generally the same advantages as set out above. The embodiment represented in figs. 7-13 exhibits the additional advantage of modularity such that different valves having different capacity, different axial length and different number of inlet and outlet channels may readily be constructed with a limited number of standard components. Especially, any desired number of mutually identical channel parts may be combined and arranged axially one after the other to thereby assemble valves of greatly varying capacity.

### Example

Comparative calculations of the efficiency at a previously known valve and a valve according to the present invention has been carried out. Except the differences in balancing of the rotor both valves are essentially equal and comprises a rotor with an active rotor length of approx. 300 mm.

At the previously know valve, a clearance of 2 mm between the rotor and the stator is needed for compensating for the deflection of the unbalanced rotor. This clearance results in a leakage opening of approx. 300 mm x 2 mm = 600 mm² between the high pressure side and low pressure side at each vane.

Calculations have been carried out for such a known valve when driven at a differential pressure of 5 bar, where the fluid pressure upstream of the device is 6 bar and downstream 1 bar. These calculations show that if the valve is driven with an input water flow of 80 litres per second, then the internal leakage from the high pressure side to the low pressure side of the rotor is approximately 19 litres per second. Hence, the internal leakage amounts to as much as approx. 24 % of the total water flow.

At the valve according to the invention it has proven to be sufficient to arrange a clearance of approx. 0,1 mm between the rotor and the stator. At the valve according to the invention a total leakage opening of approx. 300 mm x 0,1 mm x 2 = 60 mm² prevails. When calculations corresponding to the prior art example above is carried out the following enhanced results appear. With a differential pressure of 5 bar at an upstream water pressure of 6 bar and a downstream pressure of 1 bar and with an input water flow of 80 litres per second, it has proven that the internal leakage is reduced to 1,9 litres per second. Hence the internal leakage is only approx. 2,4 % of the total water flow.

The power efficiency of the valve, e.g. when the valve is connected to an electrical generator for generating electrical power, is inversely proportional to the internal leakage of the valve. Hence, when a valve according to the invention is used to replace a previously known valve under the conditions as set out in the examples above, the power efficiency is increased by approximately (100 - 2,4) / (100 - 24) = 128%.

The invention has mainly been described above with reference to a few embodiments. However, as is readily appreciated by a person skilled in the art, other embodiments than the ones disclosed above are equally possible within the scope of the invention, as defined by the appended patent claims. For example a rotor having pivotal or hinged vanes may readily be arranged in a stator of the type illustrated in figs. 7-13. Correspondingly, radially sliding vane rotors may be applied in stators of the type illustrated in figs. 1-6. Irrespective of which type of moving vanes that are used, the movement of the vanes may be controlled by means of springs, guiding rails or by other means known in the art. The number of chambers and vanes may be varied e.g. in relation to demands on capacity, dimensions and the like. Correspondingly the number of inlet and outlet channels may be varied. At embodiments where annular inlet channels and outlet channels are used, the number or inlet ports and outlet ports respectively of each channel may be one, two or any desired number. The exemplifying embodiments above comprise an even number of chambers. It is however also possible to arrange an odd number, such as three, five or seven, of chambers. In certain applications such embodiments may reduce pressure fluctuations and vibrations and may also enhance the capacity of the valve in regard of the required dimensions and the weight of the valve.

## Claims

1. A valve for regulating the fluid pressure and/or the fluid flow in a fluid distribution network, said valve comprising;
- a stator (10, 110) defining an interior space (14, 114);
- at least one inlet port (15, 131a, 132a) and at least one outlet port (16, 133a, 134a), which inlet port and outlet port are arranged for being connected to a fluid duct; and
- a rotor (20, 120) which is arranged rotatable about a rotational axis in the interior space and which is provided with a rotor core (21, 121) and a number of vanes (23, 123) which are movable in relation to the core and which rotor, in sealing relation with the stator, upon rotation continuously divides the interior space into at least two mutually separated chambers (14a, 14b, 114a-d), each chamber comprising an inlet opening (17a, 17b, 112a) and an outlet opening (18a, 18b, 112b)
**characterized by** at least one inlet channel (17, 131, 132) which connects the at least one inlet port with at least one inlet opening of each of said at least two chambers and at least one outlet channel 18, 133, 134) which connects at least one outlet opening of each of said at least two chambers with the at least one outlet port.

2. A valve according to claim 1, wherein the circumferential extension of each chamber (14a, 14b, 114a-d) about the rotor (20, 120) are essentially equal.

3. A valve according to claim 1 or 2 wherein the interior space is divided into an odd number of chambers.

4. A valve according to any of claim 1-3, wherein the inlet openings (17a, 17b, 112a) are arranged in pairs radially opposite to each other and the outlet openings (18a, 18b, 112b) are arranged in pairs radially opposite to each other.

5. A valve according to any of claim 1-4, wherein the at least one inlet channel (17, 131, 132) and the at least one outlet channel (18, 133, 134) are annular and extend circumferentially around the interior space (14, 114).

6. A valve according to claim 5, wherein each inlet channel (17, 131, 132) is connected to a respective inlet opening (17a, 17b, 112a', 112a") of two chambers (14a, 14b, 114a, 114c) and each outlet channel (18, 133, 134) is connected to a respective outlet opening (18a, 18b, 112b', 112b") of two chambers (14a, 14b, 114a, 114c).

7. A valve according to claim 6, comprising a number of inlet channels (17, 131, 132) and outlet channels (18, 133, 134), which are arranged one after the other along the axial extension of the rotor (20, 120).

8. A valve according to any of claim 1-7, wherein the inlet channels (131, 132) and outlet channels (133, 134) are formed of essentially identical parts.

9. A valve according to any of claim 1-8, wherein at least one inlet channel or outlet channel is formed of an radially inner part exhibiting at least one communication opening and a outer part exhibiting at least one inlet port or at least one outlet port respectively.

10. A valve according to claim 9, wherein the radially inner and outer parts are circumferentially slidable in relation to each other.

11. A valve according to claim 9 or 10, wherein the radially inner part is circumferentially slidable in relation to the stator.

12. A valve according to any of claim 1-11, wherein the vanes (23, 123) are arranged movable in relation to the core (21, 121) such that they define a respective active area which is parallel with the axial and radial directions of the rotor (20, 120) and which areas vary with the movement of the respective vane in relation to the core.

13. A valve according to claim 12, wherein the vanes (23, 123) are arranged such that the respective active area, upon rotation of the rotor (20, 120), is essentially zero at a position of the vane immediately before reaching the inlet opening (17a, 17b, 112a', 112a") and immediately after passing the outlet opening (18a. 18b, 112b', 112b") of each chamber (14a, 14b, 114a-d).

14. A valve according to any of claim 1-13, wherein the vanes (123) are arranged radially slidable in relation to the rotor core (121).

15. A valve according to any of claim 1-14, wherein the vanes (23) are arranged pivotal about pivotal axes which extend in parallel with the rotational axis of the rotor (20), in relation to the rotor core (21).
